# EUROPEAN PATENT APPLICATION

(11) **EP 2 693 255 A1**
(43) Date of publication of application: **05.02.2014**
(21) Application number: 12179194.1
(22) Date of filing: 03.08.2012
(51) Int. Cl.: G02B 27/01, G06F 3/02, G06F 3/023, G06F 3/01

(54) **Method and apparatus pertaining to an augmented-reality keyboard**

(71) Applicant: BlackBerry Limited, Waterloo, ON N2K 0A7 (CA)
(72) Inventor: Griffin, Jason Tyler, Ontaria N2L 3W8 (CA)
(74) Representative: Hibbert, Juliet Jane Grace

(57) **Abstract**

An augmented-reality component associates augmented-reality keycaps with corresponding physical keycaps of a physical keyboard. The augmented-reality component can comprise, at least in part, augmented-reality glasses. By one approach the augmented-reality component associates the augmented-reality keycaps with the physical keycaps by visually overlaying, at least in part, the augmented-reality keycaps with corresponding ones of the physical keycaps. By one approach the keycaps of the physical keyboard can themselves selectively display informational content but can also selectively display one or more of the physical keycaps as being informationally blank to thereby present a substantially uniform blank screen upon which the augmented-reality keycap content can be presented.

## Description

### Field of Technology

The present disclosure relates to augmented reality and in particular to the presentation of user-input interfaces.

### Background

Augmented reality comprises an area of known endeavor. Generally speaking, augmented reality comprises a live, direct (or indirect) view of a physical, real-world environment having contents that are augmented by computer-generated sensory input such as visually-perceivable content. (By way of contrast, so-called "virtual reality" replaces the user's perception of the real world with a simulated one.) In many cases the augmented-reality system aligns the overlaid imagery with specific elements of the physical world.

Some augmented-reality approaches rely, at least in part, upon a head-mounted display. These head-mounted displays often have the form-factor of a pair of glasses. Such displays place contrived images over a portion (though typically not all of) the user's view of the world. Such head-mounted displays are typically either optical see-through mechanisms or video-based mechanisms.

Some conventional approaches attempt to use augmented reality to present the user with a user-input interface. For example, a virtual keyboard may appear on a table surface to provide an alphanumeric-input mechanism in an application setting where no such user-input mechanism otherwise exists or an on/off switch may appear on a wall to permit having the user switch some aspect of the physical world or the augmentation to be switched on and off via manipulation of that switch.

Though useful to some extent for some purposes, these prior efforts sometimes yield a poor user experience. Problems include errors in accurately detecting the user's interaction with the virtual input component, a lack of natural physical feedback as would ordinarily correspond to the user's use of a physical-world user interface, and so forth.

### Brief Description of the Drawings

FIG. 1 is a perspective schematic diagram in accordance with the disclosure.

FIG. 2 is a top plan view in accordance with the disclosure.

FIG. 3 is a top plan view in accordance with the disclosure.

FIG. 4 is a top plan view in accordance with the disclosure.

FIG. 5 is a flow diagram in accordance with the disclosure.

### Detailed Description

The following describes an apparatus and method pertaining to a physical keyboard having a plurality of physical keycaps and an augmented-reality component configured to associate augmented-reality keycaps with corresponding ones of the physical keycaps. The augmented-reality component can include, by one approach, augmented-reality glasses. By one approach the augmented-reality component associates the augmented-reality keycaps with the physical keycaps by visually overlaying, at least in part, the augmented-reality keycaps with corresponding ones of the physical keycaps.

By one approach the keycaps of the physical keyboard can themselves selectively display informational content but can also selectively display one or more of the physical keycaps as being informationally blank to thereby present a substantially uniform background or screen upon which the augmented-reality keycap content can be presented.

So configured, physical keyboard components (that provide a genuine feel and utterly intuitive and natural physical feedback to the user) can be combined with easily modified keycap content to provide a user with a limitless variety of keyboards to use when inputting information. Such a capability can be readily leveraged, for example, by providing the user with a selection comprising a plurality of different sets of augmented-reality keycaps to so associate with the physical keycaps to thereby permit allowing the user to select a particular keyboard as may be particularly appropriate to meet a given input requirement or preference while simultaneously preserving the genuine feel of a physical keyboard.

These teachings are highly scalable in practice and will accommodate a wide variety of physical keyboard layouts and/or a wide variety of keycap content. These teachings are also economically enabled and can be readily applied in a variety of existing useful application settings.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

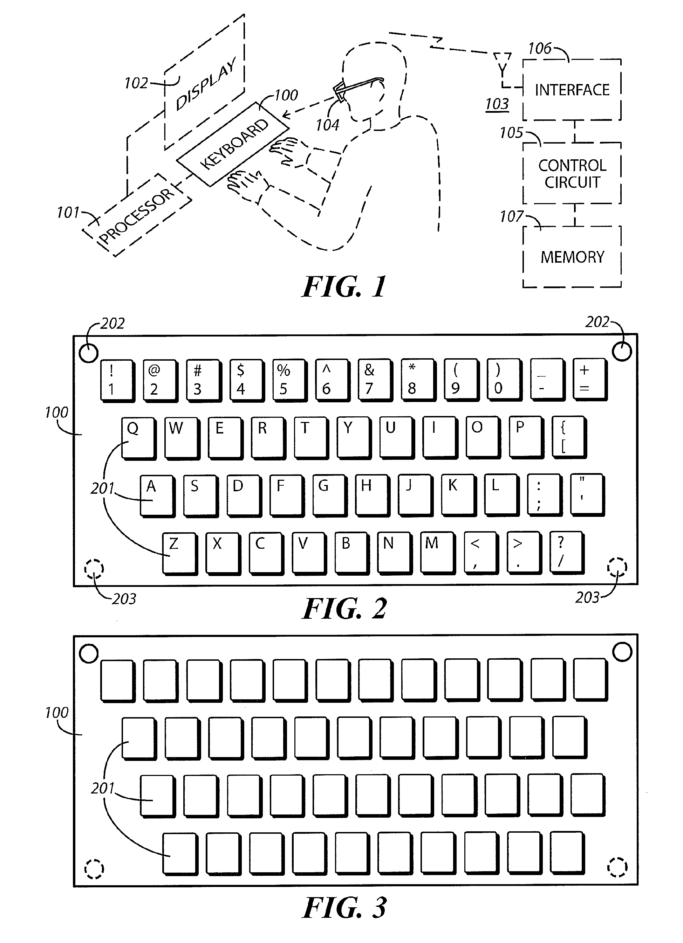

FIG. 1 presents an illustrative application setting that includes a physical keyboard 100. Referring momentarily to FIG. 2, this physical keyboard 100 can comprise a plurality of physical keycaps 201. As used herein the expression "keycaps" will be understood to refer to the upper portion of a keyboard key and hence comprises the portion of a physical key that a user presses upon with their finger in order to assert a particular key. Also, the keycap is that portion of a key that bears informational content regarding, for example, the alphanumeric character or symbol that the user will input by asserting the corresponding key.

In this particular illustrative example the physical keycaps 201 of the physical keyboard 100 are organized in four rows using a standard offset pattern for the columns. It will also be noticed that the keycaps 201 present informational content typical for a QWERTY-styled keyboard layout. It will be understood, however, that these teachings will accommodate any plural number of keycaps and essentially any layout pattern that might be chosen to suit the needs of a given application setting.

These teachings will accommodate a variety of physical keyboard mechanisms. For example, the keys of the keyboard 100 can comprise mechanical switches that temporarily close an electrical switch when asserted. As another example, the physical keyboard 100 could utilize capacitive sensors or force-sensing resistors in conjunction with physically-sculpted keycaps that are built of a single piece of contiguous material and that provide feedback to the typist using a corresponding piezo/haptics system as is known in the art. These teachings will also accommodate a variety of sizes for the keyboard 100 and the individual keycaps 201.

In this illustrative example the keyboard 100 also includes, in both upper corners thereof, an infrared light source 202 (such as, for example, infrared light-emitting diodes as are known in the art). By one approach these light sources 202 can remain constantly illuminated. By another approach the light sources 202 can be pulsed or strobed. When pulsing the light sources 202 these teachings will accommodate pulsing the two light sources 202 using different pulse rates to thereby facilitate distinguishing one light source 202 from the other. It would also be possible to have the light sources 202 emit light at different frequencies, or to modulate the emitted light in some distinguishing way, to again facilitate distinguishing one from the other.

So configured, these light sources 202 can facilitate an augmented-reality approach as described below in more detail. In these regards, additional light sources can be further provided as desired. This can optionally include, but is not limited to, including additional light sources 203 in the lower corners of the keyboard 100. When including additional light sources, the light as emitted by any particular light source can again be uniquely distinguished as desired.

Referring again to FIG. 1, in many application settings the keyboard 100 will operably couple to a processor 101. Such a processor 101 can serve, for example, to detect the particular keys being asserted by a user. In such a case, the processor 101 may well further operably couple to a display 102. So configured, for example, alphanumeric characters as entered by the user via the keyboard 100 are detected by the processor 101 and presented on the display 102. Numerous architectural approaches in these regards are well known in the art. As the present teachings are not overly sensitive to any particular selections in these regards, further elaboration regarding such approaches will not be provided here.

These teachings also provide an augmented-reality component 103 configured, as described below, to selectively display keypad indicia in combination with at least some of the aforementioned plurality of physical keycaps 201. By one approach this augmented-reality component 103 includes, at least in part, augmented-reality glasses 104.

Augmented-reality glasses tend to use one of two approaches; by one approach the glasses impose the augmented-reality content on a real-world scene that the user perceives directly through transparent lenses and by the other approach the glasses are displays that present a combination of a real-time view of what the user would perceive in the absence of wearing the glasses along with the augmented-reality content. Such approaches again comprise a well understood area of endeavor and as the present teachings are not overly sensitive to any particular choices in these regards no further elaboration will be provided here with respect to these approaches.

It will be noted, however, that such augmented-reality glasses 104 can include one or more light sensors or image sensors that are positioned and configured to work with the aforementioned light sources 202 on the keyboard 100 to thereby provide information regarding a present location, relative distance, and orientation of the keyboard 100 with respect to the user's field and point of view. This information, in turn, can be used in accordance with well understood prior art technique to register the augmented-reality content with the real-world view such that the augmented-reality content is specifically located with respect to the components of the real-world view.

There are, of course, other known ways by which the augmented-reality content can be properly placed with respect to the keyboard 100. For example, image sensors could be used to visually track one or more selected elements of the keyboard 100 to achieve the same dynamic registration result. Accordingly, it will be understood that the details presented here in these regards is intended to serve an illustrative purpose rather than to suggest any particular limitations in these regards.

The augmented-reality component 103 will also typically include a control circuit 105. By one approach this control circuit 105 can be housed within (or on) the augmented-reality glasses 104. By another approach this control circuit 105 can be physically separate from the glasses 104 and communicate with the augmented-reality glasses 104 via a corresponding interface 106. This interface 106 may comprise a wireless interface 106 (employing, for example, a Bluetooth^{™}-compatible transceiver that communicates with a corresponding transceiver (not shown) in the augmented-reality glasses 104).

Such a control circuit 105 can comprise a fixed-purpose hard-wired platform or can comprise a partially or wholly-programmable platform. These architectural options are well known and understood in the art and require no further description here. This control circuit 105 is configured (for example, by using corresponding programming as will be well understood by those skilled in the art) to carny out one or more of the steps, actions, and/or functions described herein.

By one approach this control circuit 105 also operably couples to a memory 107. This memory 107 may be integral to the control circuit 105 or can be physically discrete (in whole or in part) from the control circuit 105 as desired. This memory 107 can also be local with respect to the control circuit 105 (where, for example, both share a common circuit board, chassis, power supply, and/or housing) or can be partially or wholly remote with respect to the control circuit 105 (where, for example, the memory 107 is physically located in another facility, metropolitan area, or even country as compared to the control circuit 105).

This memory 107 can serve, for example, to non-transitorily store the computer instructions that, when executed by the control circuit 105, causes the control circuit 105 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both nonvolatile memory (such as read-only memory (ROM) as well as volatile memory (such as an erasable programmable read-only memory (EPROM).)

Such a control circuit 105 can be configured to form and/or control the provision of the aforementioned augmented-reality content via the augmented-reality glasses 104. Per the present teachings, the foregoing can comprise associating augmented-reality keycaps with corresponding ones of the aforementioned physical keycaps 201. This associating, in turn, by one approach can comprise visually overlaying, at least in part, the augmented-reality keycaps with corresponding ones of the physical keycaps 201.

In some cases, the control circuit 105 may be able to successfully overlay the augmented-reality keycap information on top of real-world information that appears on the physical keycaps 201. Such an approach may be satisfactory, for example, when the background color of the keycap closely matches the font color of the physical-keycap information. In such a case the control circuit 105 may employ augmented-reality keycap content having a very different color from either of the foregoing that the user can readily and easily distinguish and use to identify the specific augmented-reality keycap characters. (It will of course be understood that having physical, visible information on the physical keycaps 201 permits the physical keyboard to be used in a traditional way when desired and without need for the augmented-reality glasses 104.)

The present teachings are highly flexible in these regards, however, and will readily accommodate other approaches. For example, by one approach the information on the physical keycaps 201 may comprise characters that are only readily visible when backlit from within the keyboard 100. In such an application setting the control circuit 105 can be configured to also communicate with the keyboard 100 (for example, via the aforementioned interface 106) to cause the keyboard 100 to terminate the backlighting to thereby cause one or more of the physical keycaps 201 to now be informationally blank as illustrated by way of an example in FIG. 3. (These teachings will also accommodate having such backlighting be user controlled at the keyboard 100 itself. Such a capability can be supported, for example, via a user-assel table switch (not shown) or the like).

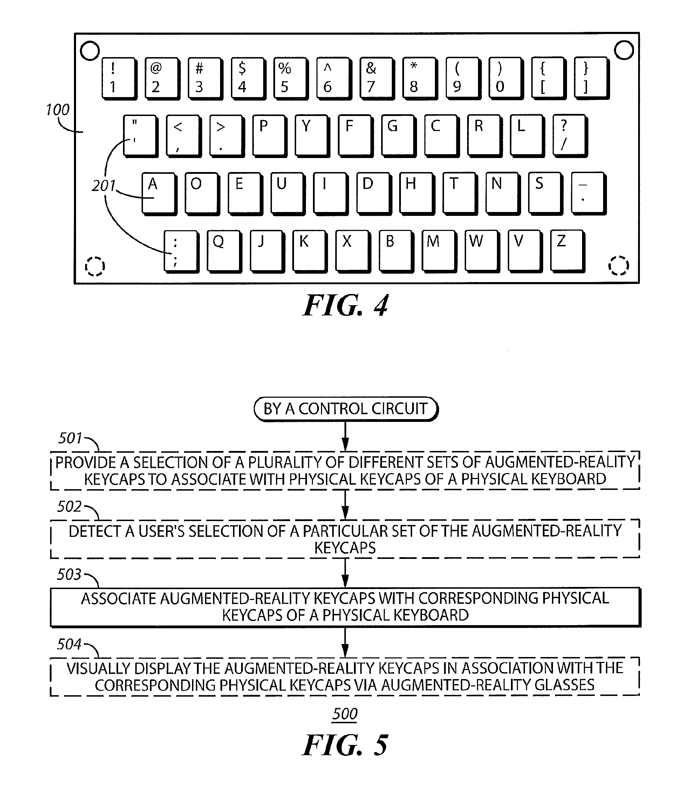

FIG. 4, in turn, provides an illustrative example where augmented-reality keycaps are associated with the physical keycaps 201 by overlaying the former on the latter. In this particular example the augmented-reality keycaps present, in combination with one another, keycaps having a Dvorak layout. By having the keyboard 100 and/or the aforementioned processor 101 configured to map the physical keycaps 201 to the augmented-reality keycaps as viewed by the user, alphanumeric input as entered via the keyboard 100 can readily track the user's specific key assertions.

As noted above, the present teachings are highly flexible in practice. FIG. 5 presents, by way of example, a number of varied approaches in these regards. In particular, FIG. 5 presents a process 500 that can be carried out by the aforementioned control circuit 105.

For example, as one optional approach this process 500 provides 501 the control circuit 105 with a selection of a plurality of different sets of augmented-reality keycaps to associate with the physical keycaps 201. Examples include sets of augmented-reality keycaps for QWERTY and Dvorak layouts in any of a variety of different-language versions, QWERTZ layouts, AZERTY layouts, and any of a wide-variety of so-called non-Latin alphabetic scripts. Other examples include any of a variety of non-alphabetic symbol sets including mathematical symbols, chemical symbols, and so forth as well as Commands or shortcuts.

In such a case, this process 500 then also provides for detecting 502 a user's selection of a particular set of such candidate augmented-reality keycaps. The specifics of this detection and selection activity can of course vary with the application setting. By one approach, for example, this may comprise detecting the user's selection of a particular key on the keyboard 100 itself. By another approach this may comprise detecting the user's selection of a virtual switch or the like as presented via the augmented-reality paradigm.

In any event, this process 500 provides for associating 503 augmented-reality keycaps with corresponding physical keycaps 201 of the physical keyboard 100 and then, in a typical application setting, visually displaying 504 the augmented-reality keycaps in association with the corresponding physical keycaps 201 via, for example, the aforementioned augmented-reality glasses 104. As noted above, this displaying 504 can comprise but is not limited to overlaying (in whole or in part) the augmented-reality content on the physical keycap 201 in the user's augmented-reality view.

So configured, the physical keycaps of a keyboard can be associated with augmented-reality keycaps to afford the user ready access to essentially any keyboard layout that might be desired (limited, perhaps, only by the number of physical keycaps themselves). This flexibility can accrue even when the physical keycaps themselves have their own real-world informational content. These teachings are highly scalable and can be applied with physical keyboards having any plural number of physical keycaps. Furthermore, by making it easier and convenient to access and utilize essentially any existing keyboard layout the present teachings provide a powerful way to leverage the ongoing value of such keyboard layouts by contributing greatly to the availability of such layouts.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a physical keyboard (100) having a plurality of physical keycaps (201);
an augmented-reality component (103) configured to associate augmented-reality keycaps with corresponding ones of the physical keycaps.

2. The apparatus of claim 1 wherein the physical keyboard is configured to selectively display key indicia via at least some of the plurality of physical keycaps.

3. The apparatus of claim 2 wherein the physical keyboard is configured to selectively display at least some of the plurality of physical keycaps as informationally blank.

4. The apparatus of claim 1 wherein the augmented-reality component includes, at least in part, augmented-reality glasses (104).

5. The apparatus of claim 1 wherein the augmented-reality component associates the augmented-reality keycaps with the physical keycaps by visually overlaying, at least in part, the augmented-reality keycaps with corresponding ones of the physical keycaps.

6. The apparatus of claim 1 wherein the augmented-reality component is further configured to provide a selection of a plurality of different sets of augmented-reality keycaps to associate with the physical keycaps.

7. A method comprising:
by a control circuit (105):
associating (503) augmented-reality keycaps with corresponding physical keycaps of a physical keyboard.

8. The method of claim 7 wherein at least some of the plurality of physical keycaps are informationally blank.

9. The method of claim 7 further comprising:
visually displaying (504) the augmented-reality keycaps in association with the corresponding physical keycaps via augmented-reality glasses.

10. The method of claim 9 wherein displaying the augmented-reality keycaps in association with the corresponding physical keycaps comprises displaying the augmented-reality keycaps as keycaps for the physical keyboard.

11. The method of claim 7 further comprising:
providing (501) a selection of a plurality of different sets of augmented-reality keycaps to associate with the physical keycaps;
detecting (502) a user's selection of a particular set of the augmented-reality keycaps;
and wherein associating augmented-reality keycaps with corresponding physical keycaps of a physical keyboard comprises associating the particular set of the augmented-reality keycaps with corresponding physical keycaps of a physical keyboard.

12. A non-transitory memory (107) having instructions stored therein, which instructions, when executed by a control circuit (105), cause the control circuit to associate augmented-reality keycap with corresponding physical keycap of a physical keyboard.
